(19)

Europäisches
Patentamt
European
Patent Office
Office européen
des brevets

(11) **EP 4 610 027 A1**

(12) **EUROPEAN PATENT APPLICATION**

(43) Date of publication:
**03.09.2025 Bulletin 2025/36**

(21) Application number: **24159926.5**

(22) Date of filing: **27.02.2024**

(51) International Patent Classification (IPC):
**B29C 64/393** $^{(2017.01)}$ **B29C 64/124** $^{(2017.01)}$
**B29C 64/245** $^{(2017.01)}$ **B33Y 10/00** $^{(2015.01)}$
**B33Y 50/02** $^{(2015.01)}$

(52) Cooperative Patent Classification (CPC):
**B29C 64/393; B29C 64/232; B29C 64/236;**
**B29C 64/286; B33Y 10/00; B33Y 50/02;**
B29C 64/129; B29C 64/245; B29C 64/277

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Université de Liège**
**4000 Liège (BE)**

(72) Inventor: **DIGREGORIO, Gabriel**
**4340 Awans (BE)**

(74) Representative: **IP HILLS NV**
**Bellevue 5/501**
**9050 Gent-Ledeberg (BE)**

(54) **METHOD FOR CONTROLLING A 3D PRINTING SYSTEM AND 3D PRINTING SYSTEM**

(57) Computer-implemented method for controlling a movement of a build plate of a 3D printing system along a substantially vertical Z-axis, and a 3D printing system comprising a build plate configured to move along a substantially vertical Z-axis and a motor configured to drive said build plate.

Fig. 1

EP 4 610 027 A1

## Description

## Field of the Invention

The present invention generally relates to a method for controlling a movement of a build plate of a 3D printing system along a substantially vertical Z-axis, as well as to a 3D printing system.

## Background of the Invention

Three-dimensional (3D) printing refers to the construction of a three-dimensional object based on a digital 3D model of the object by depositing material, such as for example plastics, liquids or powder grains being fused, layer by layer under computer control. It is also called additive manufacturing. Since 3D printing allows to build objects relatively rapidly and at a relatively low cost, it is often used for prototyping tools, for example for medical, industrial or research applications. According to standard usage, a 3D printed layer is included in an XY-plane, and a next layer is added along the Z-axis.

Among many different types of 3D printing, stereolithography (SLA) is an additive manufacturing process in which an ultraviolet laser focusses on a vat of photopolymer resin, which solidifies and thus forms a layer of the 3D object. This process is generally performed top-down but can also be done bottom up. A known disadvantage of traditional SLA printers is that they are relatively slow in printing because the laser must scan an entire surface of each layer.

In Digital Light Processing (DLP) printers, an entire layer's image is projected onto the resin vat through a projector lens or for example through a system of digital micro-mirrors (DMD) to achieve a substantially uniform light distribution on the resin. In LED-LCD SLA printers or masked stereolithography (MSLA) printers, a plurality of LED lights, preferably evenly distributed, is used as light source instead of a laser light, with or without mirrors and/or lenses. LED light passes through a Liquid Crystal Diode (LCD) screen, of which the pixels act as a mask to the LED light. Again, an object layer can be projected at once.

In some applications, in particular, for mould fabrication in microfluidics or for lab-on-chip systems or for other applications requiring high precision manufacturing processes, such as in biomedical devices or chemical analysis tools, precision is key, in particular along the Z-axis defining layer thickness of a printed layer. Microfluidic systems, in which micrometre-sized structures may be required, are therefore often manufactured in polydimethylsiloxane (PDMS) by soft lithography. The current resolution of 3D printing, in particular along the Z-axis, remains a major hurdle for the manufacturing of microfluidic devices and/or moulds by 3D printing. At the same time, surface quality of 3D printed parts may be a critical factor in numerous applications, in particular in the field of microfluidics. A smoother surface can reduce friction and resistance, while a certain level of roughness can enhance fluid control.

In spite of evolving technology in the field of additive manufacturing, there is still a need for 3D printing devices with improved precision, in particular to micrometrelevel, and improved repeatability.

## Summary of the Invention

It is therefore an aim of the present invention to solve or at least alleviate one or more of the above-mentioned problems. In particular, the invention aims at providing an improved computer-implemented method for controlling a movement of a build plate of a 3D printing system along a substantially vertical Z-axis as well as a relatively reliable 3D printing system providing relatively high accuracy, in particular in layer thickness.

To this aim, according to a first aspect of the invention, there is provided a computer-implemented method for controlling a movement of a build plate of a 3D printing system along a substantially vertical Z-axis having the features of claim 1. In particular, the method comprises the following steps: data is received representing a distance to the build plate acquired by a distance sensor of the 3D printing system. In particular, the data represent a distance between a distance sensor mounted on the 3D printing system and the build plate, preferably along the substantially vertical Z-axis. Then, a position of the build plate, in particular a position along said substantially vertical Z-axis, is determined based on said received distance data. A target position of the build plate is also received via any known input procedure. Said target position is the position of the build plate to be reached for printing and can for example be determined by a controller configured to control the 3D printing process. A difference between said position of the build plate and the target position of the build plate is then determined. Next, a speed for a motor of the 3D printing system configured to move the build plate along a substantially vertical Z-axis is determined. It is understood that speed includes a direction of movement by including positive and negative speeds. In an inventive way, said speed is dependent on a difference between said determined position of the build plate and a target position. Said determined speed is then transmitted to the motor of the 3D printing system. The preceding steps are being repeated in a continuous loop until the target position of the build plate has been reached, or, in other words, until the determined position of the build plate based on the received distance data equals the target position of the build plate. As a result of the method, output speed will then be zero. Thanks to the continuous reception of distance data and continuous output of a determined speed to the motor of the 3D printing system based on said distance data, the precision of movement of the build plate along the substantially vertical Z-axis can be improved, which has a direct impact on the layer thickness. More in particular, it can result in a potential decrease in layer thickness and thus in an improved minimal layer thickness of the 3D printing system.

The speed can preferably be directly proportional to the difference between the determined position of the build plate and the target position, in particular when said difference is between more or less 5 mm and more or less 0.04 mm. In this way, the movement of the build plate is gradually decreased when approaching its target position. The computer-implemented method can for example be implemented on a proportional-derivative-integral (PID) controller. In that case, the proportionality can come from the proportional term of the controller while the derivative term and the integral term can preferably be set to zero to avoid any oscillation around the target position, which is important to avoid any damage to an already printed layer at micrometre precision. Other implementations are possible as well.

The speed transmitted to the motor of the 3D printing system can advantageously be a step speed for a stepper motor. A step speed for a stepper motor can be controlled with relatively high precision and stability. In combination with appropriate electronics, even microsteps in between predetermined positions can be reached. Alternatively, other motor types known to the person skilled in the art can be used to drive the build plate, such as a brushless DC motor or a linear motor. Depending on the type of motor, the speed which is determined by the controller and transmitted to the motor can have a different form.

In case the speed is a stepper speed for a stepper motor, it may be preferred to set said step speed to a constant number of steps per second when the difference between the determined position of the build plate and the target position is more than a predetermined first threshold, in particular more than substantially 5 mm. As an example, the step speed may be set to 100 steps per second. Other step speed settings are possible. In this way, a relatively large distance for the build plate to overcome does not result in a relatively high speed of the build plate so that relatively high accelerations and/or decelerations can be avoided.

When the speed is a step speed for a stepper motor, said step speed can advantageously be set to a constant fraction of a step per second when the difference between the position of the build plate and the target position is less than a predetermined second threshold, in particular less than substantially 0.04 mm. As an example, the step speed may be set to 0.3 steps per second. Other constant fractions as a step speed are possible as well. In this way, a target position of the build plate can be reached at a relatively slow speed, so that damage to the already printed layers can be avoided.

The speed may preferably be further dependent on a penalty factor configured to mitigate initial acceleration and/or deceleration. In other words, the penalty factor is configured to smooth transitions between different speeds of the build plate, to obtain a relatively smooth movement of the build plate and/or to avoid any relatively sudden or abrupt change in speed. Such a smooth transition could also be reached by an integral term of a PID controller. However, this is not desirable since such an integral term can lead to an unwanted position overshoot of the build plate, which could destroy an already printed portion. Therefore, a penalty factor is preferred. Said penalty factor can be determined in many different ways known to the person skilled in the art. The penalty factor can be considered as a proportional controller acting on the proportional term of the P-controller. The penalty factor may for example be a real number having a value between 0 and 1 depending on the error function of the P-controller, a value close to 1 setting a speed of movement of the build plate close to 0. Other penalty factors may also be used.

The step of determining a position of the build plate can advantageously be based on a mean of distance data within a predetermined time window and/or over a predetermined number of measurement values. Depending on the type of distance sensor, the distance to the build plate may be determined by said distance sensor at a relatively high frequency, for example at a frequency between more or less 2000 Hz to more or less 2500 Hz. To improve accuracy of the position determination of the build plate which may be moving during said distance determination, the position of the build plate may be determined based on a mean value of the received data representing a distance to the build plate. The predetermined time window and/or the predetermined number of measurement values may for example include 5 to 12 sample distance measurements, thus providing more or less 200 to 500 mean distance measurements per second. Other measurement frequencies and/or different time windows and/or other low pass filters, such as a median filter, may also be used to an advantage. In this way, robustness of the method can be improved in that an influence of outliers, artifacts, measurement noise and/or measurement errors can be attenuated. This step can improve accuracy of the distance measurement and thus stability of the movement of the build plate and prevent oscillations.

The method can advantageously further comprise the step of receiving a measured temperature from a temperature sensor of the 3D printing system. The step of determining a position of the build plate based on said distance data may then further be based on the received temperature. Said temperature sensor can preferably be configured to measure a temperature close to the distance sensor, in particular when the distance sensor is a laser distance sensor. Since a distance measurement by a laser distance sensor may be temperature dependent, a correction of the measured distance by a measured temperature can enhance accuracy of the position determination of the build plate. Alternatively, said determination at least partly based on temperature may be performed in calibration steps only, or may be superfluous depending on the type of distance sensor.

According to a further aspect of the invention, there is provided a controller, a computer program product and a computer readable storage medium having the features of claims 9-11 respectively. They can provide one or more of the above-mentioned advantages.

The controller can preferably be a proportional-derivative-integral (PID) controller, more preferably a proportional controller, in which the derivative and integral terms are set to zero. Such hardware PID controllers can provide a relatively rapid response due to the absence of digital processing latency. Such a hardware solution can reduce the risk of potential software issues. Alternatively, other type of controllers can be used, such as for example Fuzzy Logic Controllers (FLC), Model Reference Control, Model Predictive Control, Adaptive Control or Feedforward control, which all suffer from one or more disadvantages with respect to the present method, such as complexity of implementation, risk of instability, need for significant computer resources, or others.

According to a further aspect of the invention, there is provided a 3D printing system having the features of claims 12 - 16. Such a system can provide one or more of the above-mentioned advantages.

The distance sensor of the 3D printing system can advantageously be a laser distance sensor. A laser sensor can provide relatively accurate distance measurements over a relatively large range at a relatively high frequency or measurement rate, for example at a rate of more or less 2000 Hz to more or less 2500 Hz. Moreover, a laser sensor is a contactless sensor, thus avoiding any friction which could negatively affect the movement of the build plate. Other distance sensors may also be used, such as for example an ultrasonic sensor, an infrared sensor, a millimetre wave radar, a 3D vision sensor, or a proximity sensor based on a capacitive or inductive change in electric or magnetic field. A linear encoder could also provide a distance measurement. The distance sensor can preferably be mounted along a vertical axis along which the build plate is configured to move such that the distance sensor can perform a substantially vertical distance measurement to the build plate. If the distance sensor is positioned under an angle with respect to the vertical axis along which the build plate is configured to move, the controller can be configured to take into account said angle in determining a position of the build plate based on the distance measurement by the distance sensor.

The 3D printing system can further include a temperature sensor configured to measure a temperature. The temperature sensor can preferably be placed close to the distance sensor, in particular when the distance sensor is a laser distance sensor. In this way, an air temperature close to the (laser) distance sensor can be measured. Since a measurement by a laser distance sensor may be sensitive to temperature, a correction can be applied when determining a distance to the build plate. Such a temperature sensor can be used at a calibration phase only, during start-up of the 3D printing system or also during regular operations of the 3D printing system.

The motor configured to drive the build plate to move along said substantially vertical axis can advantageously be a stepper motor. A stepper motor can be controlled relatively precisely. In combination with dedicated electronics, micro-stepping can be applied, thus reaching a precision of movement below a micrometre. Other types of motors, such as a brushless DC motor, could be used as well, but may be less precise and/or less stable.

It is preferred that the 3D printing system is a LED-LCD printing system, in particular a MSLA 3D printing system, including a plurality of UV lights configured to illuminate a photosensitive resin, and an LCD screen mounted to a frame. The LCD screen is configured to mask at least part of the light emitted by the plurality of UV lights. The relatively precise control of the vertical movement of the build plate thanks to the presence and data use of the distance sensor can be particularly advantageous for this type of printing systems. Even if known SLA printing systems can already reach a precision of a layer thickness between more or less 5 to 10 micron per layer, the present control system in combination with a LED-LCD printing system, in particular with an MSLA printing system, can reach a layer thickness of around 1 to 2 micron per layer.

Contrary to known LED-LCD printing systems, the frame may preferably be configured to be movable or adjustable in an X - Y plane substantially transverse to said substantially vertical Z-axis. An adjustment of said frame in a X - Y plane can correct a position of the LCD screen serving as mask in the 3D printing process, which may increase printing accuracy. At the same time, it can allow to not print a layer in a single step, but to print in multiple steps while adjusting a position of the LCD screen. An adjustment of the screen attached to the frame may further allow to tune a roughness of a printed surface. The movement in the X - Y plane is preferably a movement at micrometre level. Thereto, the frame may advantageously be driven by at least two piezo-electric actuators, in particular by at least one piezo-electric actuator per direction. Alternatively, the frame may be driven by electrostatic actuators, magnetic actuators, or systems based on shape memory alloys (SMA), electroactive polymers (EAP) or microelectromechanical systems (MEMS).

The 3D printing system can further include a mobile cart mounted to a substantially vertical column and configured to support the build plate. The mobile cart is configured to be movable along said substantially vertical column by a ball screw linear guiding system. The mobile cart may preferably be connected to said substantially vertical column via a ball screw, which can withstand a relatively high load. More preferably, the mobile cart may be connected to said substantially vertical column via a preloaded double nut screw, which can minimize mechanical play while maximizing torsional and axial stiffness. In this way, a coupling between the motor, in particular between a shaft's angle of rotation of a stepper motor, and a translation along the substantially vertical column can be improved. Alternatively, a trapezoidal screw can be used. Other systems to provide translation of the cart along said substantially vertical column can also be used, such as for example a pneumatic or hydraulic system, a rack and pinion system, a belt drive or a chain drive.

According to a further aspect of the invention, there is provided a LED-LCD 3D printing system having the features of claims 17 - 18. Such a system can be combined with the above-mentioned features or can be considered as an invention on its own. In this way, a position of the screen can be continuously controlled in a substantially horizontal X - Y plane, preferably with sub-micrometre movements, in order to accurately position the pixels of the screen at a predetermined target position needed for printing. Such an accurate positioning can allow tuning of a roughness of the printed surface.

The frame can advantageously be driven by at least two piezo-electric actuators. In particular, the frame may be driven by at least one piezo-electric actuator per direction. The actuators are based on the piezo-electric effect of materials expanding or contracting in response to an applied electric field, enabling the actuators to reach a high level of accuracy and reliability. Piezo-electric actuators can reach micrometre or even sub-micrometre precision. Moreover, piezo-electric actuators are relatively small and light-weight while being able to generate a relatively high force in a relatively short response time. Alternatively, other actuators can be used, as already previously mentioned.

## Brief Description of the Drawings

Fig. 1 shows a schematic view of a preferred embodiment of a 3D printing system according to an aspect of the invention;

Fig. 2 shows a flowchart of a preferred embodiment of the method for controlling a movement of a build plate of a 3D printing system along a substantially vertical Z-axis according to an aspect of the invention;

Fig. 3 shows a graph representing a motion controlled by the method of Figure 2 of the build plate of the 3D printing system of Figure 1 to a target position;

Fig. 4 shows a histogram representing test results of a layer height reached by a 3D printing system of Figure 1 controlled by the method of Figure 2;

Fig. 5 shows a schematic view on a preferred embodiment of a LED-LCD 3D printing system according to a further aspect of the invention; and

Fig. 6 shows a computing system suitable for performing various steps of the method of Figures 2.

## Detailed Description of Embodiment(s)

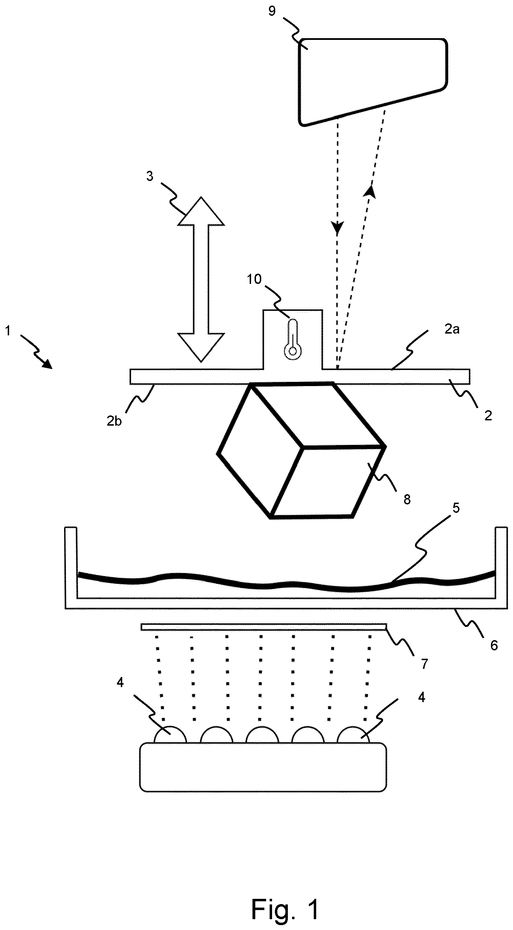

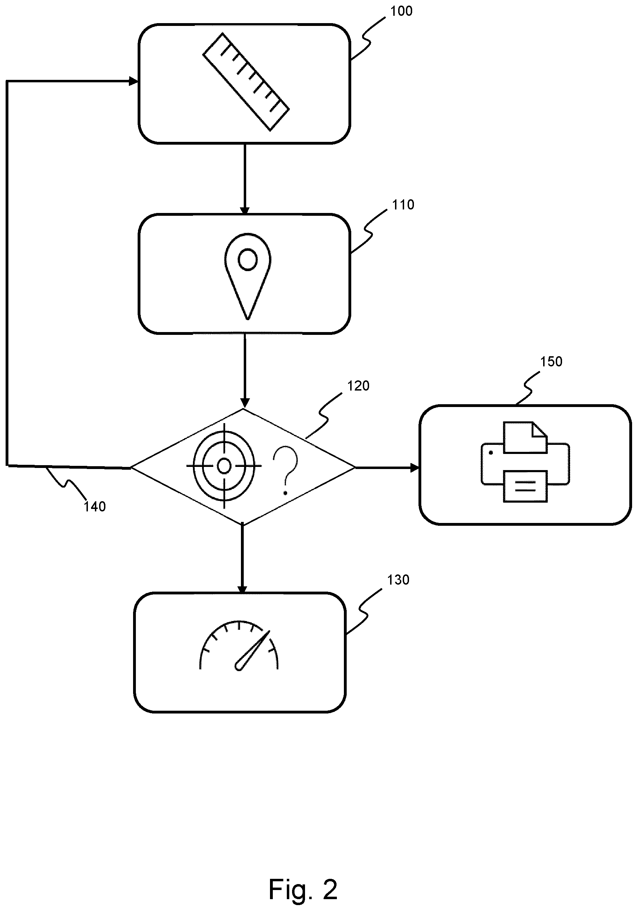

Figure 1 shows a schematic view of a preferred embodiment of a 3D printing system according to an aspect of the invention. The 3D printing system 1 can for example be a LED-LCD printing system. The 3D printing system 1 comprises a build plate 2 configured to move along a substantially vertical Z-axis 3 and a motor (not shown) configured to drive said build plate along said substantially vertical Z-axis 3, preferably a stepper motor. The build plate 2 may be fixedly mounted on a bracket or cantilever extending from a mobile cart configured to move along a pole or column extending along said substantially vertical Z-axis 3. The 3D printing system can further comprise a plurality of UV lights 4 configured to illuminate a photosensitive resin 5 contained in a vat 6 having a transparent bottom allowing UV light pass through to the resin 5. The plurality of UV lights can preferably be configured to provide substantially uniform light, for example by adding a layer of lenses on top of the plurality of UV lights, for example a UV LED matrix. The UV lights are preferably configured to emit light of 405 nm wavelength since most resins react to this wavelength. The 3D printing system can further comprise an LCD screen 7 mounted to a support frame (not shown). The LCD screen 7 is configured to mask at least part of the light emitted by the plurality of UV lights 4. A resolution and a pixel size of the screen may preferably, but need not, be lower than 35 $\mu$m. The 3D printing system is based on the principle of photopolymerization using light to solidify a liquid photopolymer layer by layer to form a three-dimensional object 8. Thereto, the UV light preferably emits coherent power to reduce photopolymerization time and avoid overheating. Light from the UV lights 4 passes through the LCD screen 7 of which each pixel acts as a mask either blocking or letting the light pass through, thus determining the shape of each printed layer. The build plate 2 is smaller than a top opening of the vat 6 such that the build plate 2 can be lowered into the resin 4. The build plate 2 is configured to slowly move upwards along the substantially vertical Z-axis 3 as layer per layer is being printed upside down, so adding a new layer to a bottom side of the previous layer as seen along the substantially vertical Z-axis 3. In an inventive way, the 3D printing system according to the present invention further includes a distance sensor 9, preferably a laser distance sensor, configured to measure a distance to the build plate 2 and a controller for controlling a movement of the build plate 2 of the 3D printing system 1 along the substantially vertical Z-axis 3 such that a speed of the motor of the 3D printing system is dependent on a difference between a determined position of the build plate 2 and a target position of said build plate 2 according to the computer-implemented method which will be explained with respect to Figure 2. The distance sensor 9 is preferably mounted on a fixed bracket substantially centrally above the build plate as seen along the substantially vertical Z-axis such that the distance sensor can provide a distance along said substantially vertical Z-axis. Above the build plate is understood to be towards an upper side 2a of the build plate 2 opposing the lower side 2b of the build plate 2 on which the 3D object 8 can be printed. The 3D printing system 1 can further include a temperature sensor 10, which may for example be mounted on an upper side of the build plate, preferably as close as possible to a reflective location for the laser beam of the laser distance sensor. Such a temperature sensor 10 can allow to correct a distance measurement for potential temperature sensitive variations.

Figure 2 shows a flowchart of a preferred embodiment of the computer-implemented method for controlling a movement of a build plate of a 3D printing system along a substantially vertical Z-axis according to an aspect of the invention. In a first step 100, data representing a distance to the build plate acquired by a distance sensor 9 of the 3D printing system 1 is received. In a next step 110, based on said distance data a position of the build plate 2 is determined. Then, in step 120, a position of the build plate 2 is compared to a target position for printing a layer of the 3D object 8. Said target position may have been received from software controlling the 3D printing system 1, in particular controlling a printing task. If the target position is reached, a layer of the 3D object can be printed in step 150. If not, a speed is determined in step 130 for a motor of the 3D printing system 1 configured to move the build plate 2 along a substantially vertical Z-axis 3. The speed is dependent on a difference between said determined position of the build plate and a target position. Said determined speed is transmitted to the motor of the 3D printing system, for example via pulse width modulation signal frequency tuning. As long as the target position is not reached, the preceding steps will continuously be repeated 140 as a continuous feedback loop until the target position of the build plate has been reached. With a laser distance sensor 9, a relatively high number of distance measurements may be received. The step 110 of determining a position of the build plate may then be based on a mean of distance data within a predetermined time window or of a predetermined number of distance measurements.

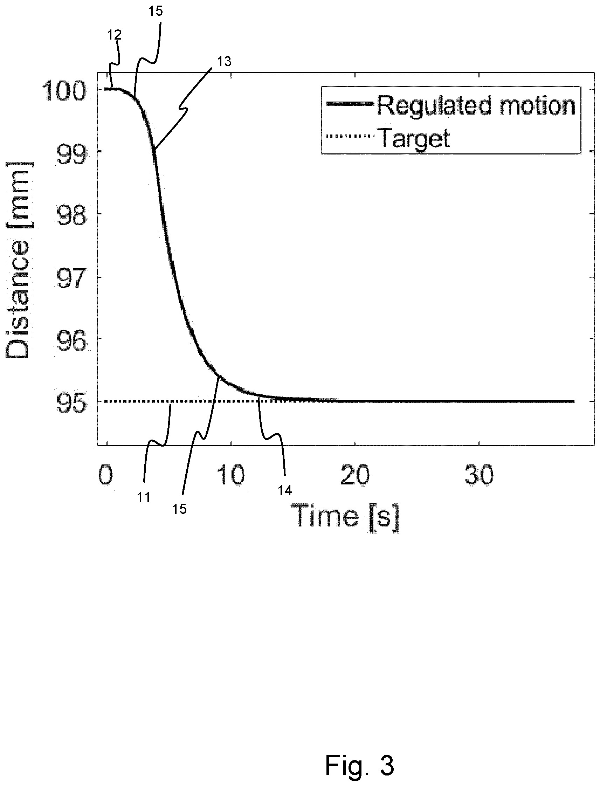

Figure 3 shows a graph representing a motion controlled by the method of Figure 2 of the build plate of the 3D printing system of Figure 1 to a target position. A determined position of the build plate 2 at a time of measurement is plotted as a distance towards the target position, represented as a dotted line 11. In step 130, when a speed for the motor is determined, the difference between said determined position of the build plate 2 and a target position can preferably be compared to a first upper threshold and a second lower threshold. When the distance between the determined position of the build plate 2 and the target position is above said first upper threshold, then the speed of the build plate 2 is preferably set to a constant speed (not shown), for example, in case of a stepper motor, to a constant number of steps per second. In portion 12 of the graph, the build plate is at rest, so having a speed of zero. Once the build plate 2 starts to approach the target position and when the determined position is between the first upper threshold and the second lower threshold, as shown in portion 13 of the graph, then the speed is preferably directly proportional to the difference between the determined position of the build plate and the target position. When the build plate 2 further approaches the target position such that the difference between the position of the build plate and the target position is less than a predetermined second lower threshold, as in portion 14, then the speed can become a constant speed again, for example a constant fraction of steps per second in case of a stepper motor. Such fraction of steps can for example be obtained by combining the stepper motor with suitable electronics such that the movement of the build plate can reach sub-micrometre precision. As a result, a relatively high initial speed of the build plate can be reduced while the build plate approaches its target position and is complemented by micro-steps such that the target position is approached gradually rather than rapidly to prevent overshooting.

The present method is preferably executed by a PID controller, more preferably by a P controller. The controller is configured to receive a measured distance to the build plate as input and to output a speed of movement to move said build plate. Such a controller can for example operate under the formula:

$$v\big(e(t)\big) = \begin{cases} 100\,\dfrac{steps}{s}\,if\ e(t) > 5\ mm \\ 0.3\,\dfrac{steps}{s}\,if\ e(t) < 0.04\ mm \\ 15\cdot e(t)\,otherwise \end{cases}$$

with v being the determined speed as a function of e(t) being the error function, i.e. the difference between said determined position of the build plate based on the measured distance and a target position. Other constants may be used, both for the first upper threshold of 5 mm, the lower second threshold of 0.04 mm, or for the number or fraction of number of steps per second as speed for a stepper motor. To smoothen a transition 15 between said three different speeds, in particular to mitigate a large initial acceleration at the start of motion, the determination of said speed can include a penalty factor configured to mitigate initial acceleration and/or deceleration of the build plate 2. Said penalty factor is independent of the PID terms and can for example be a factor modifying the proportional controller output based on the current error, ensuring a gradual speed increase and avoiding abrupt accelerations.

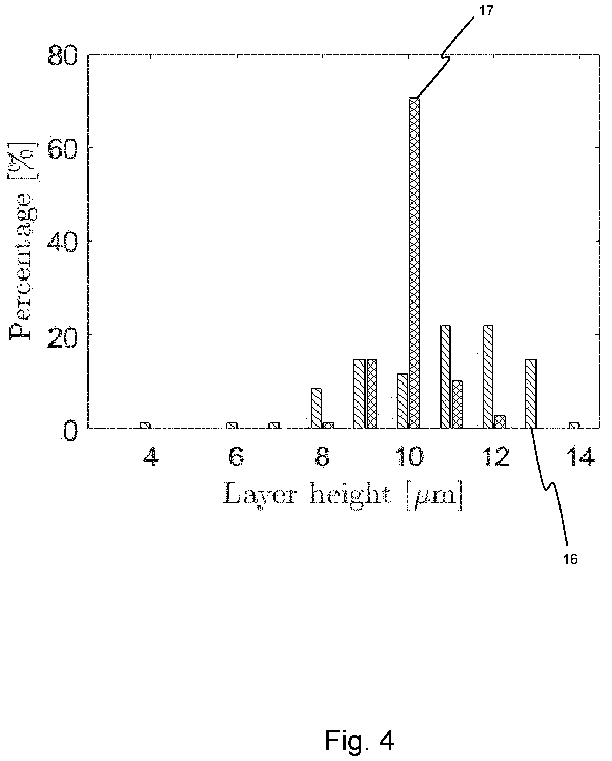

Figure 4 shows a histogram representing test results of a layer height reached by a 3D printing system of Figure 1 controlled by the method of Figure 2 compared to commercially available MSLA printing systems. Since an accuracy of a layer height of the printed object 8 is directly influenced by a good control of the movement of the build plate 2 along a substantially vertical Z-axis, tests have been performed with commercially available MSLA printing systems and with a 3D printing system 1 as previously described of which the movement of the build plate is controlled according to the method as described including a continuous loop checking the position of the build plate and adjusting a speed of the build plate based on said determined position. Layer heights reached by commercially available MSLA printing systems at micrometre precision are shown as slanted bars 16 while layer heights reached by a 3D printing system according to the present invention are shown as crossed bars 17. The histogram shows that layer heights reached by commercially available printing systems present a relatively wide spread of layer heights, whereas the 3D printing system according to the present invention, presents a relatively small spread having a clear peak indicating an improved accuracy in printed layer height thanks to the unprecedented accuracy in control of the movement of the build plate of the 3D printing system.

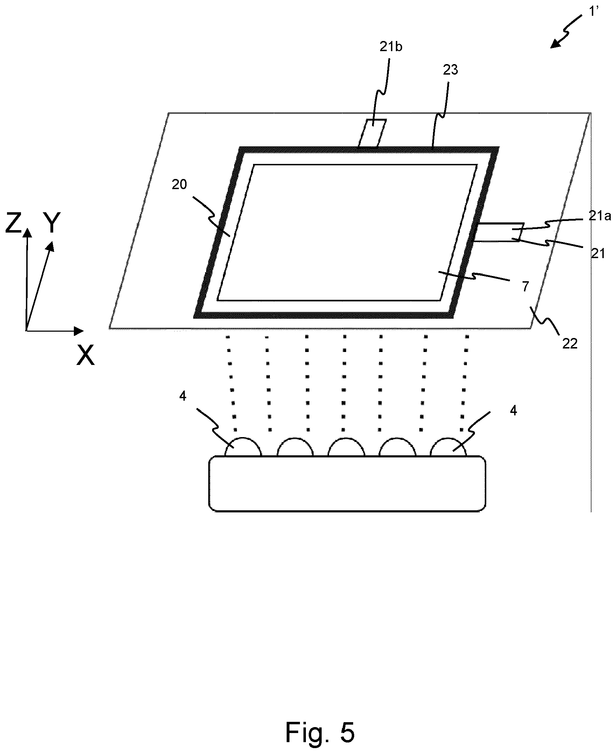

Figure 5 shows a schematic view on a portion of a preferred embodiment of a LED-LCD 3D printing system 1' according to a further aspect of the invention. The LED-LCD 3D printing system 1' comprises a build plate (not shown) configured to move along a substantially vertical Z-axis, a plurality of UV lights 4 configured to illuminate a photosensitive resin (not shown) and an LCD screen 7 mounted to a frame 20, the LCD screen 7 being configured to mask at least part of the light emitted by the plurality of UV lights 4. In an inventive way, the frame 20 is configured to be movable in an X - Y plane substantially transverse to said substantially vertical Z-axis. Thereto, the 3D printing system 1' may further include at least two piezo-electric actuators 21, preferably a first actuator configured to drive the frame in a first direction, for example in the direction along the X-axis, and a second actuator 21b configured to drive the frame in a second direction along the Y-axis. The movable frame 20 may be mounted to a fixed frame 22 of the 3D printing system 1'. The 3D printing system 1' may further include a pre-tensioned element 23 positioned between the movable frame 20 and the fixed frame 22. Said pre-tensioned element 23 may for example include an elastomeric seal or a mechanical spring assembly or any other suitable pre-tensioned element known to the person skilled in the art. The frame 20 which is movable in an X - Y plane may be considered as an independent invention or may be combined with the 3D printing system as shown in Figure 1.

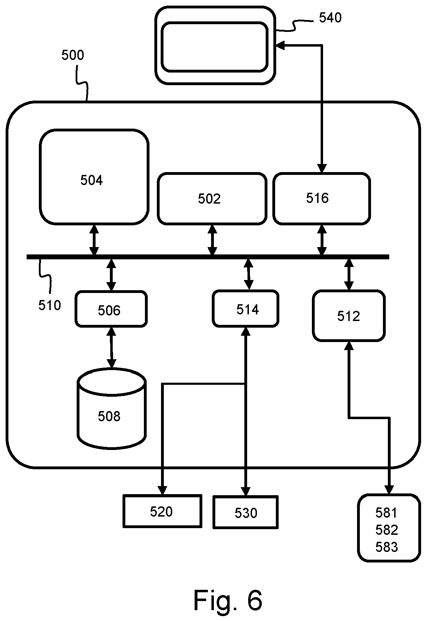

Figure 6 shows a suitable computing system 500 comprising circuitry enabling the performance of steps of embodiments of the method for mapping spatial attention according to an aspect of the invention. The computing system 500 may at least partly be integrated in the head mounted device 2, as previously described. Computing system 500 may in general be formed as a suitable general-purpose computer and comprise a bus 510, a processor 502, a local memory 504, one or more optional input interfaces 514, one or more optional output interfaces 516, a communication interface 512, a storage element interface 506, and one or more storage elements 508. Bus 510 may comprise one or more conductors that permit communication among the components of the computing system 500. Processor 502 may include any type of conventional processor or microprocessor that interprets and executes programming instructions. Local memory 504 may include a random-access memory (RAM) or another type of dynamic storage device that stores information and instructions for execution by processor 502 and/or a read only memory (ROM) or another type of static storage device that stores static information and instructions for use by processor 502. Input interface 514 may comprise one or more conventional mechanisms that permit an operator or user to input information to the computing device 500, such as a keyboard 520, a mouse 530, a pen, voice recognition and/or biometric mechanisms, a camera, etc. Output interface 516 may comprise one or more conventional mechanisms that output information to the operator or user, such as a display 540, etc. Communication interface 512 may comprise any transceiver-like mechanism such as for example one or more Ethernet interfaces that enables computing system 500 to communicate with other devices and/or systems, for example with other computing devices 581, 582, 583. The communication interface 512 of computing system 500 may be connected to such another computing system by means of a local area network (LAN) or a wide area network (WAN) such as for example the internet. Storage element interface 506 may comprise a storage interface such as for example a Serial Advanced Technology Attachment (SATA) interface or a Small Computer System Interface (SCSI) for connecting bus 510 to one or more storage elements 508, such as one or more local disks, for example SATA disk drives, and control the reading and writing of data to and/or from these storage elements 508. Although the storage element(s) 508 above is/are described as a local disk, in general any other suitable computer-readable media such as a removable magnetic disk, optical storage media such as a CD or DVD, -ROM disk, solid state drives, flash memory cards, ... could be used.

As used in this application, the term "circuitry" may refer to one or more or all of the following:

    (a) hardware-only circuit implementations such as implementations in only analogue and/or digital circuitry and
    (b) combinations of hardware circuits and software, such as (as applicable):

        (i) a combination of analogue and/or digital hardware circuit(s) with software/firmware and

(ii) any portions of hardware processor(s) with software (including digital signal processor(s)), software, and memory(ies) that work together to cause an apparatus, such as a mobile phone or server, to perform various functions) and

(c) hardware circuit(s) and/or processor(s), such as microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

**Claims**

1.  Computer-implemented method for controlling a movement of a build plate of a 3D printing system along a substantially vertical Z-axis, the method comprising the steps of:

    - receiving data representing a distance to the build plate acquired by a distance sensor of the 3D printing system;
    - determining a position of the build plate based on said distance data;
    - determining a speed for a motor of the 3D printing system configured to move the build plate along a substantially vertical Z-axis, wherein the speed is dependent on a difference between said determined position of the build plate and a target position;
    - transmitting said determined speed to the motor of the 3D printing system;
    - continuously repeating the preceding steps until the target position of the build plate has been reached.

2.  Computer-implemented method according to claim 1, wherein the speed is directly proportional to the difference between the determined position of the build plate and the target position, in particular when said difference is between substantially 5 mm and substantially 0.04 mm.

3.  Computer-implemented method according to any of the preceding claims, wherein the speed is a step speed for a stepper motor.

4.  Computer-implemented method according to claim 3, wherein said step speed is set to a constant number of steps per second when the difference between the determined position of the build plate and the target position is more than a predetermined first threshold, in particular more than substantially 5 mm.

5.  Computer-implemented method according to any of the preceding claims 3 - 4, wherein said step speed is set to a constant fraction of steps per second when the difference between the position of the build plate and the target position is less than a predetermined second threshold, in particular less than substantially 0.04 mm.

6.  Computer-implemented method according to any of the preceding claims, wherein the speed is further dependent on a penalty factor configured to mitigate initial acceleration and/or deceleration.

7. Computer-implemented method according to any of the preceding claims, wherein the step of determining a position of the build plate is based on a mean of distance data within a predetermined time window.

8. Computer-implemented method according to any of the preceding claims, further comprising the step of receiving a measured temperature from a temperature sensor of the 3D printing system, wherein the step of determining a position of the build plate based on said distance data is further based on the received temperature.

9. A controller comprising at least one processor and at least one memory including computer program code, the at least one memory and computer program code configured to, with the at least one processor, cause the controller to perform the method according to any of the preceding claims 1-8.

10. A computer program product comprising computer-executable instructions for performing the method according to any of the preceding claims 1-8 when the program is run on a computer.

11. A computer readable storage medium comprising computer-executable instructions for performing the methods according to any of the preceding claims 1-8 when the program is run on a computer.

12. 3D printing system comprising

   - a build plate configured to move along a substantially vertical Z-axis;
   - a motor configured to drive said build plate;
   wherein the 3D printing system further comprises
   - a distance sensor configured to measure a distance to the build plate;
   - a controller according to claim 9.

13. 3D printing system according to claim 12, wherein the distance sensor is a laser distance sensor.

14. 3D printing system according to any of the preceding claims 12 - 13, wherein the motor is a stepper motor.

15. 3D printing system according to any of the preceding claims 12 - 14, wherein the 3D printing system is a LED-LCD printing system including

   - a plurality of UV lights configured to illuminate a photosensitive resin;
   - an LCD screen mounted to a frame, the LCD screen being configured to mask at least part of the light emitted by the plurality of UV lights.

16. 3D printing system according to claim 15, wherein the frame is configured to be movable in an X - Y plane substantially transverse to said substantially vertical Z-axis.

17. LED-LCD 3D printing system comprising

   - a build plate configured to move along a substantially vertical Z-axis;
   - a plurality of UV lights configured to illuminate a photosensitive resin;
   - an LCD screen mounted to a frame, the LCD screen being configured to mask at least part of the light emitted by the plurality of UV lights;

   wherein the frame is configured to be movable in an X - Y plane substantially transverse to said substantially vertical Z-axis.

18. LED-LCD 3D printing system according to claim 17, wherein the frame is driven by at least two piezo-electric actuators.

Fig. 1

Fig. 2

Fig. 3

Fig. 4

Fig. 5

Fig. 6

Europäisches
Patentamt

European
Patent Office

Office européen
des brevets

# EUROPEAN SEARCH REPORT

**Application Number**

EP 24 15 9926

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/266543 A2 (3DFORTIFY INC [US]) 22 December 2022 (2022-12-22) | 1-3,6,7, 9-18 | INV. B29C64/393 B29C64/124 B29C64/245 B33Y10/00 B33Y50/02 |
| A | * claims * <br> * paragraph [0025] - paragraph [0027] * <br> * paragraph [0040] * <br> * paragraph [0081] - paragraph [0093]; figure 1B * <br> * paragraph [0110] - paragraph [0124] * <br> * paragraph [0147] * <br> * figure 2B * <br> * figure 2C * <br> * figures 5A,5B * <br> * figures 6A,6B * <br> ----- | 4,5,8 | |
| X | WO 2018/194551 A1 (HEWLETT PACKARD DEVELOPMENT CO [US]) 25 October 2018 (2018-10-25) | 1-7,9-16 | |
| A | * paragraph [0024] * <br> * paragraph [0033] - paragraph [0044] * <br> * claims * <br> * paragraph [0054] * <br> ----- | 8 | |
| X | WO 2020/005717 A1 (INTREPID AUTOMATION [US]) 2 January 2020 (2020-01-02) | 1-3,5-14 | TECHNICAL FIELDS SEARCHED (IPC) B29C B33Y |
| A | * paragraph [0005] * <br> * paragraph [0047] - paragraph [0058] * <br> * paragraph [0105] * <br> * paragraph [0113] * <br> * claims * <br> * figures 1A-1D * <br> ----- | 4 | |
| X | EP 3 107 703 B1 (GLOBAL FILTRATION SYSTEMS DBA GULF FILTRATION SYSTEMS INC [US]) 8 April 2020 (2020-04-08) * paragraph [0048] - paragraph [0049] * * claims * * paragraph [0024] * ----- | 1,2,7, 9-14 | |

-/--

The present search report has been drawn up for all claims

| Place of search | Date of completion of the search | Examiner |
|---|---|---|
| The Hague | 22 July 2024 | Whelan, Natalie |

EPO FORM 1503 03.82 (P04C01)

page 1 of 2

| | Europäisches Patentamt<br>European Patent Office<br>Office européen des brevets | **EUROPEAN SEARCH REPORT** | **Application Number**<br><br>EP 24 15 9926 |

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| X | US 2017/129169 A1 (BATCHELDER J SAMUEL<br>[US] ET AL) 11 May 2017 (2017-05-11)<br>* figures 1,2,4 *<br>* claims *<br>* paragraph [0057] - paragraph [0058] *<br>* paragraph [0078] - paragraph [0107] *<br>----- | 1-7,9-16 | |
| | | | **TECHNICAL FIELDS<br>SEARCHED (IPC)** |

The present search report has been drawn up for all claims

| Place of search | Date of completion of the search | Examiner |
|---|---|---|
| The Hague | 22 July 2024 | Whelan, Natalie |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 15 9926

This annex lists the patent family members relating to the patent documents cited in the above-mentioned European search report.
The members are as contained in the European Patent Office EDP file on
The European Patent Office is in no way liable for these particulars which are merely given for the purpose of information.

22-07-2024

| Patent document cited in search report | | Publication date | Patent family member(s) | | Publication date |
|---|---|---|---|---|---|
| WO 2022266543 | A2 | 22-12-2022 | US | 2024100778 A1 | 28-03-2024 |
| | | | WO | 2022266543 A2 | 22-12-2022 |
| WO 2018194551 | A1 | 25-10-2018 | CN | 110494272 A | 22-11-2019 |
| | | | EP | 3551431 A1 | 16-10-2019 |
| | | | US | 2021206109 A1 | 08-07-2021 |
| | | | WO | 2018194551 A1 | 25-10-2018 |
| WO 2020005717 | A1 | 02-01-2020 | CN | 112368133 A | 12-02-2021 |
| | | | EP | 3814117 A1 | 05-05-2021 |
| | | | US | 2020001525 A1 | 02-01-2020 |
| | | | US | 2020262135 A1 | 20-08-2020 |
| | | | US | 2021060854 A1 | 04-03-2021 |
| | | | US | 2022402199 A1 | 22-12-2022 |
| | | | US | 2024042682 A1 | 08-02-2024 |
| | | | WO | 2020005717 A1 | 02-01-2020 |
| EP 3107703 | B1 | 08-04-2020 | AU | 2015218851 A1 | 08-09-2016 |
| | | | EP | 3107703 A1 | 28-12-2016 |
| | | | US | 2015231831 A1 | 20-08-2015 |
| | | | US | 2019047277 A1 | 14-02-2019 |
| | | | WO | 2015127176 A1 | 27-08-2015 |
| US 2017129169 | A1 | 11-05-2017 | NONE | | |

EPO FORM P0459

For more details about this annex : see Official Journal of the European Patent Office, No. 12/82